# EUROPEAN PATENT SPECIFICATION

(11) **EP 1 445 441 B1**
(45) Date of publication and mention of the grant of the patent: **26.07.2006**
(21) Application number: 04100354.2
(22) Date of filing: 02.02.2004
(51) Int. Cl.: F01N 3/20, F01N 11/00, F01N 3/08, F02D 41/02, B01D 53/04, B01D 53/94, F02D 41/14

(54) **Exhaust gas purifying system for internal combustion engine**
Abgasreinigungssystem für eine Brennkraftmaschine
Système de purification des gaz d'échappement d'un moteur à combustion interne

(30) Priority: 07.02.2003 JP 2003031184
(43) Date of publication of application: 11.08.2004
(73) Proprietor: Isuzu Motors Limited, Shinagawa-ku, Tokyo (JP)
(72) Inventor: NAGAOKA, Daiji, 8 Tsuchidana, Fujisawa-shi, Kanagawa, (JP); GABE, Masashi, 8 Tsuchidana, Fujisawa-shi, Kanagawa, (JP); SAKAMOTO, Takayuki, 8 Tsuchidana, Fujisawa-shi, Kanagawa, (JP)
(74) Representative: Weber, Dieter

(56) References cited:
- EP-A- 0 735 250
- EP-A- 1 138 898
- EP-A- 1 384 866
- WO-A-02/084086
- US-A- 5 743 084
- US-B1- 6 477 834

## Description

The present invention relates to an exhaust gas purifying system for an internal combustion engine, composed of a NOx occlusion reduction type catalyst which reduces NOx (nitrogen oxides) in the exhaust gas of the internal combustion engine. To be more concrete, the invention relates to the technique for preventing HC, CO from being exhausted into the atmospheric air during rich-condition control for restoring the catalytic function of the NOx occlusion reduction type catalyst.

Various kinds of researches and proposals have been made concerning an NOx catalyst for reducing and purifying NOx in the exhaust gas of the internal combustion engines such as diesel engines and a part of gasoline engines, and various combustion systems.

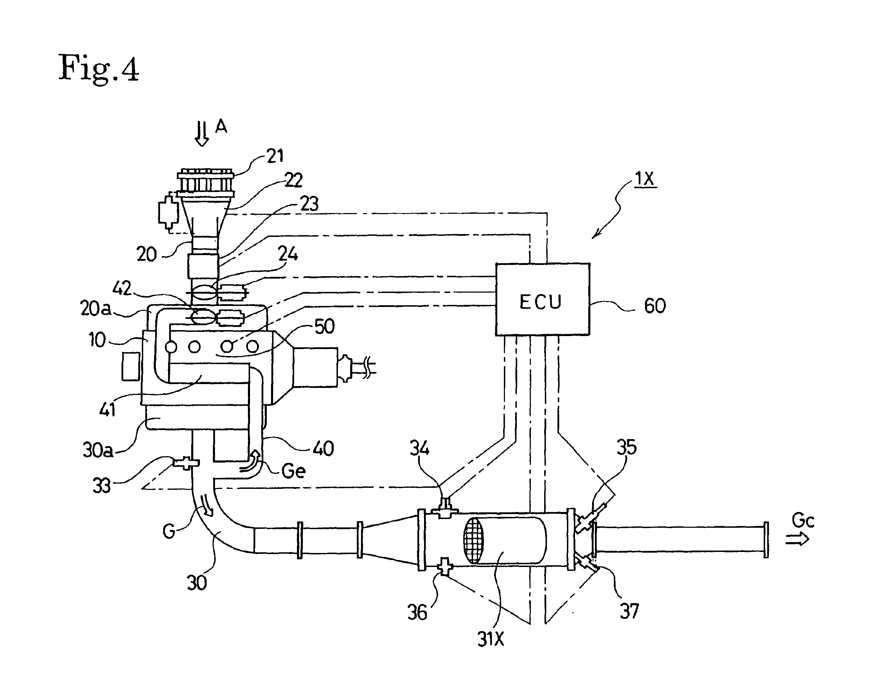

One of them is the exhaust gas purifying system 1X where a NOx occlusion reduction type catalyst 31X is arranged in the exhaust gas passage 30 of the internal combustion engine 10 as shown in Fig.4. This exhaust gas purifying system 1X makes the NOx occlusion reduction type catalyst 31X absorb NOx when an air/fuel ratio of the inflow exhaust gas is lean. The regenerating operation is performed, when the NOx occlusion ability is almost saturated. In this regenerating operation, rich control for regenerating the NOx occlusion ability is performed to decrease the oxygen concentration of the inflow exhaust gas by making an air/fuel ratio of the exhaust gas to the theoretical air/fuel ratio or rich. The occluded NOx is discharged in the process. This discharged NOx is reduced by the catalytic function of an attached noble metal catalyst.

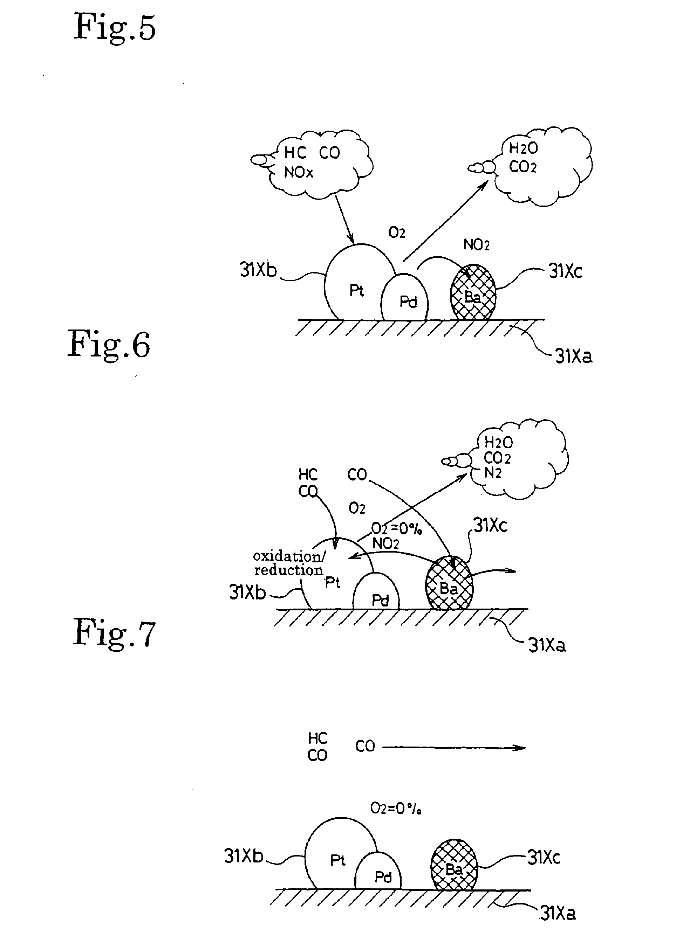

As shown in Fig. 5 to 7, this NOx occlusion reduction type catalyst, a noble metal catalyst 31Xb and a NOx occluding material (NOx occluding substance) 31Xc on a catalyst carrier 31Xa such as alumina. The noble metal catalyst 31Xb is composed of platinum (Pt), palladium (Pd), or the like. The NOx occluding material (NOx occluding substance) 31Xc is composed of alkaline-earth metal such as barium (Ba). As shown in Fig.5, in a lean (high oxygen concentration) atmosphere, NO in the exhaust gas is oxidized to NO₂ by the catalytic action of the noble metal catalyst 31Xb. This NO₂ is diffused in the catalyst in the form of NO₃⁻, and occluded in the NOx occluding material 31Xc in the form of a nitrate.

When the air/fuel ratio become rich and the oxygen concentration is decreased as shown in Fig.6, NO₃⁻ is discharged from the NOx occluding material 31Xc in the form of NO₂. This NO₂ is reduced to N₂ with the reducer such as the unburned HC, CO, and H₂ contained in the exhaust gas by the catalytic action of the noble metal catalyst 31Xb. This catalytic action prevents NOx from being discharged into the atmospheric air.

Moreover, with this NOx occlusion reduction type catalyst, the sulfur contained in the fuel of a diesel engine is accumulated in the NOx occluding material, to be stabilized as a sulfate. Therefore, an occlusion quantity of NOx is reduced. The catalyst deterioration by sulfur poisoning develops, as the purifying rate of NOx is lowered and fuel cost is increased. For this reason, when the catalyst deterioration has developed to some extent, sulfur purge is carried to remove the sulfur.

By this sulfur purge, the sulfur (S) occluded in the NOx occluding material as barium sulfate (Ba₂PO₄) is made into sulfur dioxide (SO₂) by bringing the catalyst into a high temperature and oxygenless atmosphere, and also supplying carbon oxide (CO) thereto. Thus, the NOx occluding ability is restored.

Hereafter, rich control is performed for both of the rich control for restoring the NOx occluding ability and the sulfur purge control. Therefore, both of them shall be summarized and called rich control hereafter.

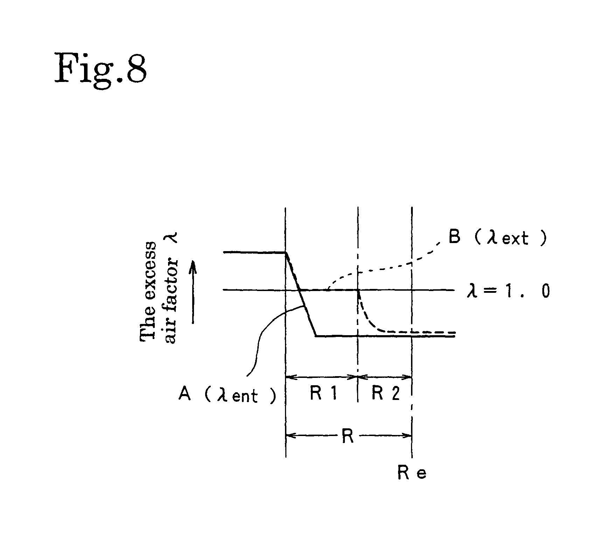

In this rich control, as shown in Fig.8, an excess air factor λ ext (dashed line B) at the catalyst exit is higher than an excess air λ ent (full line A) at the catalyst entrance during the first term R1 of the rich control but quickly decreases in the second term R2 to the same level as the excess air factor λ ent or lower.

Therefore, for example, according to the Japanese Patent Laid-Open No. 10-121944 (121944/1998), an oxygen concentration difference before and after the catalyst is monitored, and when this oxygen concentration difference becomes small or the oxygen concentration at the catalyst exit falls lower than the oxygen concentration at the catalyst entrance, the discharge and reduction of NO₂ in the catalyst is judged as completed and the rich control is ended at that point Re.

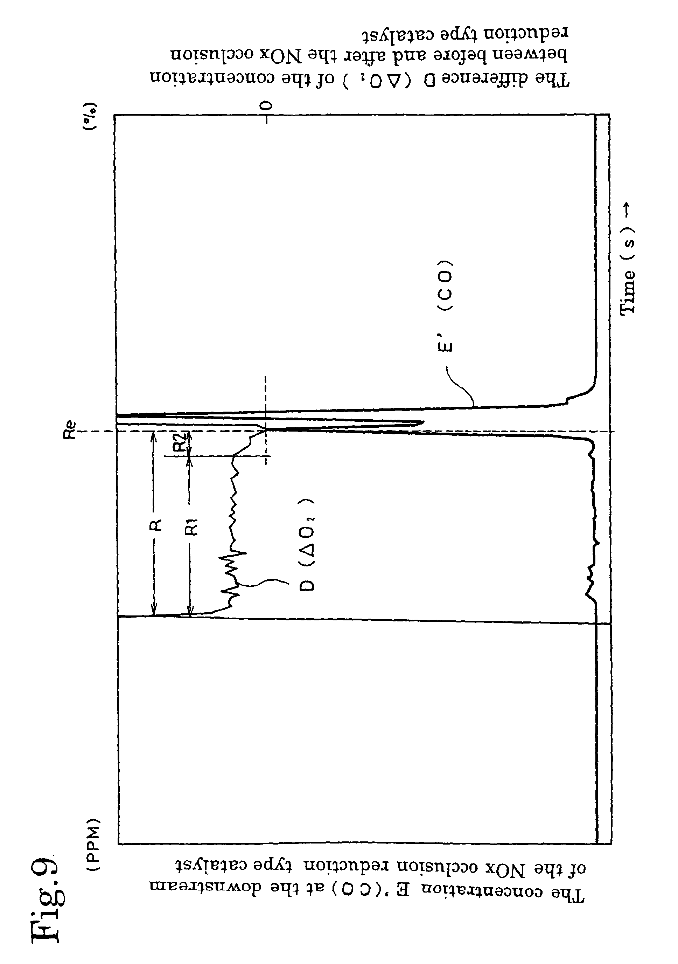

However, at the same time as the change of the oxygen concentrations difference before and after the catalyst, an outflow of the reducers such as HC and CO is caused. Therefore, there is a problem that the reducers such as HC and CO throw out into the atmospheric air to some extent, if the rich control is ended after the changes in the oxygen concentrations are detected by the oxygen concentration sensors. Namely, as shown in Fig.9, the CO discharge (full line E') is increased at the same time as the rich control is ended.

This reason is as follows. As shown in Fig.6, in the first term R1 of the rich control, O₂ is supplied into the exhaust gas by the oxidation-reduction reaction of NO₂ discharged from the occluding material 31Xc. However, as shown in Fig.7, in the second term R2 of the rich control, the supply of O₂ into the exhaust gas is also ended at the same time as the discharge and reduction of NO₂ are ended. Therefore, CO is also no longer oxidized and flows out into the atmosphere.

In order to prevent this reducer from flowing out into the atmospheric air, for example, the exhaust gas purifying system for the internal combustion engine disclosed by the Japanese Patent NO.2658753 is provided with a secondary air-feeding device in the exhaust gas passage of the internal combustion engine. When the air/fuel ratio is changed from lean to rich, the secondary air is fed into the exhaust gas passage of the engine from the secondary air-feeding device so as to oxidize the excessive unburned components exhausted from the NOx occluding material.

However, in order to arrange the secondary air-feeding device, an electric air pump, a secondary air-feeding pipe for feeding the secondary air from the secondary air-feeding device into the exhaust gas passage of the engine, an electromagnetic secondary air valve for controlling the supply of the secondary air, or the like are necessary. Therefore, the structure of such exhaust gas treating system is too complex and costly.

In document WO 02/084086 A1 there is disclosed an internal combustion engine provided with an NOₓ absorbing reduction catalyst in an exhaust gas passage with an oxygen sensor which is mounted downstream of the NOₓ absorbing reduction catalyst in the exhaust gas passage and with a determination means for determining a condition of degradation of the NOₓ absorbing reduction catalyst on the basis of a time length during which a voltage value, having a small amount of variation before the voltage value outputted from the oxygen sensor is recorded as a maximum value when executing a rich spike, is recorded.

US 5,743,084 discloses a method and an apparatus for the on-board monitoring of NOₓ trap performance that uses two HEGO sensors, one positioned upstream of the NOₓ trap, and the other positioned downstream of the NOₓ trap. Then the engine are/is reduced from lean to stoichiometric or rich operation to regenerate or purge the NOₓ trap the difference in the time it takes for the upstream and downstream HEGO sensors to switch from a lean to a rich indication provides a quantitative measure of the amount of NOₓ that was stored on the NOₓ trap during the previous lean period of operation.

### SUMMARY OF THE INVENTION

The present invention has been made to resolved the above-mentioned problems, and the purpose thereof is to provide an exhaust gas purifying system for an internal combustion engine according to the features of claim 1.

Moreover, the rich control for restoring the catalytic function of this first exhaust gas purifying device includes the rich control for restoring the NOx occluding ability and the rich control for purging sulfur for letting the catalyst restore from deterioration caused by sulfur poisoning. And also the expressions of the oxygen concentration sensors and the oxygen concentrations include the indications to be related with the oxygen concentrations such as an excess air factor sensor and an excess air factor even though the indication modes are different.

According to the exhaust gas purifying system related to the present invention, the second exhaust gas purifying device for purifying HC and CO is arranged at the downstream of the first exhaust gas purifying device, therefore, the reducers such as HC and CO, which have been generated at the time of ending the rich control with the conventional technology, can be prevented from flowing out into the atmospheric air.

### BRIEF DESCRIPTION OF THE DRAWINGS

Fig. 1 shows a construction of the exhaust gas purifying system in an embodiment according to the present invention.
Fig. 2 shows an example of a control flow chart of the exhaust gas purifying system in an embodiment according to the present invention.
Fig. 3 shows the excess air factors and carbon monoxide concentration of the exhaust gas in an embodiment and an example
Fig. 4 shows a construction of the exhaust gas purifying system according to the conventional technology.
Fig. 5 diagrammatically illustrates the configuration of the NOx occlusion reduction type catalyst and the purifying mechanism in the lean state of the lean control (the occlusion of NOx).
Fig. 6 diagrammatically illustrates the configuration of the NOx occlusion reduction type catalyst and the purifying mechanism in the first term state of the rich control (R1: discharging and reducing).
Fig. 7 diagrammatically illustrates the configuration of the NOx occlusion reduction type catalyst and the purifying mechanism in the second term state of the rich control (R2: after the discharge of the NOx).
Fig. 8 is a chart showing the variations of the excess air factor λ ent at the catalyst entrance and the excess air factor λ ext at the catalyst exit during the rich control in the exhaust gas purifying system according to the conventional technology.
Fig. 9 shows an outflow situation of carbon monoxide at the time of ending the rich control in the exhaust gas purifying system according to the conventional technology.
Fig. 10 shows the relationships of the purifying factors of NOx, HC, and CO to oxygen concentrations with the NOx reduction type catalyst.

### DETAILED DESCRIPTION OF THE PREFERRED EMBODIMENT

In the following, the exhaust gas purifying system for an internal combustion engine in the embodiment according to the present invention will be explained referring to the drawings.

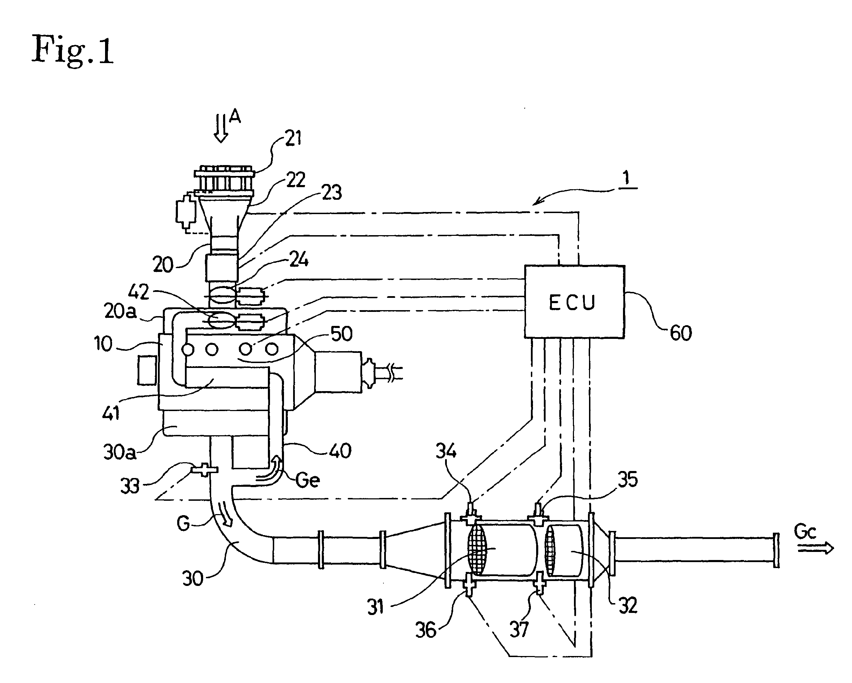

As shown in Fig.1, this exhaust gas purifying system 1 is comprised of the first exhaust gas purifying device 31 for purifying NOx, and the second exhaust gas purifying device 32 having a function of purifying the reducers such as HC and CO in the exhaust gas passage of the engine 10 from the upstream side.

This exhaust gas purifying system 1 is provided with an air cleaner 21, an air flow meter 22, a MAF (mass air flow) sensor 23, and an intake throttle valve 24 from the upstream side in the intake passage 20 of the engine 10.

Moreover, in the exhaust gas passage 30, the first exhaust gas purifying device 31 and the second exhaust gas purifying device 32 are arranged. This first exhaust gas purifying device 31 is composed of the NOx occlusion reduction type catalyst. Moreover, the second exhaust gas purifying device 32 is composed of any one of an NOx occlusion reduction type catalyst, and a DPF supporting the NOx occlusion reduction type catalyst, either singly or in combination.

Further, in the exhaust gas passage 30, an exhaust gas temperature sensor 33, a catalyst entrance exhaust gas concentration sensor 34, a catalyst exit exhaust gas concentration sensor 35, a catalyst entrance temperature sensor 36, and a catalyst exit temperature sensor 37 are arranged. These exhaust gas concentration sensors 34, 35 are the sensors for measuring an oxygen concentration (or an excess air factor) and a NOx concentration.

Moreover, an EGR passage 40 is arranged, and in this EGR passage 40, an EGR cooler 41 and an EGR valve 42 are arranged.

The engine 10 with the exhaust gas purifying system 1 is provided with a common-rail injection system 50 for performing fuel injection, and an electronic control device (electronic control box) 60 called an ECU (engine control unit) to carry out the whole control for the engine 10.

In this exhaust gas purifying system 1, the air A, passing through the air cleaner 21, the air flow meter 22, the MAF sensor 23, and the intake throttle valve 24, is fed into the cylinders through the intake manifold 20a of the engine 10. The flow rate of the air A is regulated by the control of the intake throttle valve 24 which is controlled by the electronic control device 50.

Moreover, the exhaust gas G, coming out of the an exhaust manifold 30a and sequentially passing through the first exhaust gas purifying device 31 and the second exhaust gas purifying device 32 in the exhaust gas passage 30, is exhausted from a tail pipe (not illustrated) through a muffler (not illustrated). This exhaust gas G is cleaned by the first exhaust gas purifying device 31 and the second exhaust gas purifying device 32 into cleaned exhaust gas Gc.

After passing through the EGR passage 40 and being cooled through the EGR cooler 41, the EGR gas Ge, a part of the exhaust gas G is re-circulated into the intake manifold 20a through the EGR valve 42. The EGR valve 42 regulates the flow rate of the EGR gas Ge and makes the EGR operation on or off.

As shown in Fig.5 - Fig.7, the NOx occlusion reduction type catalyst in the first exhaust gas purifying device 31 is composed of a catalytic metal 31Xb and a NOx occluding material (NOx occluding substance) 31Xc which are carried on the surface of a carrier body 31Xa formed of monolithic honeycomb cells made of γ-alumina or the like.

This catalytic metal (noble metal catalyst) 31Xb can be composed of platinum (Pt), Palladium (Pd), or the like having oxidation activity in the temperature area higher than the activity start temperature. Moreover, the NOx occluding material (NOx absorbent) 31Xc can be composed of any one of an alkaline metal, an alkaline earth metal, and a rare earth metal, or a combination of them. The alkaline metals include potassium (K), sodium (Na), lithium (Li), cesium (Cs), or the like. The alkaline earth metals include barium (Ba), calcium (Ca), or the like. Moreover, the rare earth metals include lanthanum (La), yttrium (Y), or the like. This NOx occluding material 31Xc occludes NOx when the oxygen concentration in the gas is high, and discharges NOx when the oxygen concentration in the gas is low.

As shown in Fig.5, NO in the exhaust gas is oxidized to NO₂ by the catalytic action of the catalytic metal 31Xb in a high oxygen concentration atmosphere in which the exhaust gas is of the lean state (lean combustion). This NO₂ diffuses in the catalyst in the form of NO₃⁻, and is absorbed in the NOx occluding material 31Xc in the form of a nitrate (Ba (NO₃)₂). Namely, NO₂ is selectively occluded in the NOx occluding material 31Xc by changing from barium carbonate (BaCO₃) into barium nitrate (Ba (NO₃)₂).

As shown in Fig.6, NO₃⁻ changes into NO₂ when the exhaust gas is brought into the rich state and the oxygen concentration decreases, and NO₂ is discharged from the NOx occluding material 31Xc. Namely, NO₂ is discharged by changing from barium nitrate (Ba (NO₃)₂) into barium carbonate (BaCO₃). This discharged NO₂ is reduced to N₂ with the reducers such as unburned HC and CO contained in the exhaust gas by the catalytic action of the catalytic metal 31Xb. This catalytic action is able to prevent NOx from being discharged into the atmospheric air.

To make the exhaust gas rich-condition as described above does not always mean only rich combustion in the cylinder bores, but also means that a ratio of an air quantity to a fuel quantity (including the portion burned in the cylinder bores) which have been supplied into the exhaust gas flowing into the first exhaust gas purifying device 31 with the NOx occlusion reduction type catalyst has only to be close to the theoretical air-fuel ratio or to be in a rich state in which the fuel quantity is more than that at the theoretical air-fuel ratio.

Moreover, the NOx occlusion reduction type catalyst carried in the second exhaust gas purifying device 32 is a NOx occlusion reduction type catalyst similar to the catalyst in the first exhaust gas purifying device 31. Moreover, the DPF (diesel particulate filter) supporting the NOx occlusion reduction type catalyst is made to support a NOx occlusion reduction type catalyst similar to the catalyst in the first exhaust gas purifying device 31 on the DPF.

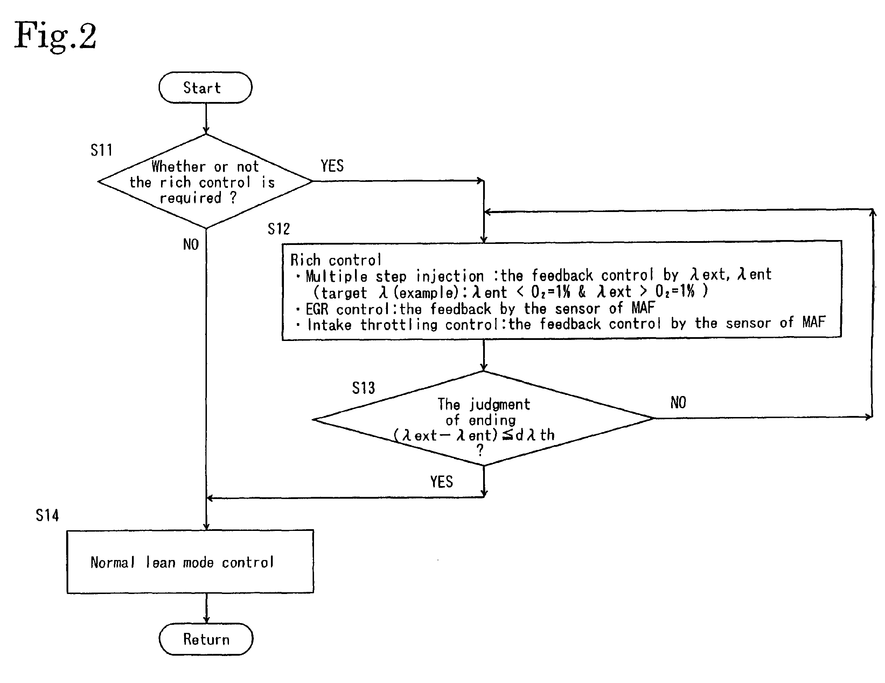

This exhaust gas purifying system 1 is controlled by the method according to the control flow as shown in Fig.2 as an example.

This control flow in Fig.2 is shown repeatedly called and executed together with another control flow for the engine 10 during operating the engine 10.

When this control flow starts, it is judged whether or not the rich control for restoring the NOx occluding ability or purging sulfur is required at the step S11. If it is not required (NO), normal lean mode operation that is normal lean-burn operation (lean combustion) is performed for a predetermined time (a time related to a judgment interval of rich control) at the step S14, and then the control flow returns.

Moreover, if the rich control is required (YES) at the step S11, the rich control is performed at the step S12.

This rich control brings the exhaust gas into the rich state in which the oxygen concentration is almost zero, by adjusting an injection quantity of multi-step injection and injection timing in the control of the fuel injection into the cylinders, EGR, the intake throttle valve, or the like. Namely, the multi-step injection is performed in the fuel injection control. At the same time, an excess air factor λ detected from the catalyst exit exhaust gas concentration sensor 35 is monitored and controlled by feedback so as to be λ t as a target. Then, the EGR gas quantity and the intake throttle quantity are controlled by feedback while monitoring the output of the MAF sensor 23 for measuring the intake air quantity.

In this rich control, the controlled range of the rich atmosphere is controlled on the basis of an oxygen concentration. The oxygen concentration at the catalyst entrance needs to be controlled so as to be a concentration (for example 1%) or lower in which NO₂ can be discharged from the NOx occluding material 31Xc. And also the oxygen concentration at the catalyst exit needs to be controlled so as to be a concentration (for example 1%) or higher in which HC and CO can be oxidized and are not caused to flow out into the atmospheric air.

After having performed this rich control for a predetermined control time (a time related to an interval for judging to end the rich control), it is judged at the step S13 whether or not the difference (Δλ = λext - λent) between the excess air factor λ ext at the catalyst exit and the excess air factor λ ent at the catalyst entrance is a predetermined judgment value Δ λ th or lower. Namely, it is judged whether or not the difference between the oxygen concentration at the catalyst exit and the oxygen concentration at the catalyst entrance is a predetermined concentration difference or smaller, namely, is not higher than the predetermined judgment value.

If it is judged at the step S13 that the excess air factor difference Δ λ is larger than the predetermined judgment value Δ λ th, the control flow returns to the step S12 and the rich control is continued until the excess air factor difference Δλ becomes the predetermined judgment value Δλth or smaller. When the excess air factor difference Δ λ becomes the predetermined judgment value Δ λ th or smaller, the rich control is ended to be operated in the normal lean mode at the step S14, and then returns to the start.

This control flow is repeatedly called for until the engine key is switched off.

Namely, this control flow of starting, executing the steps S11 - S14 and returning to the start is repeatedly performed.

Moreover, the above-mentioned flow is simplified for an easy understanding. Therefore, the descriptions of the data entry and data processing parts for judging the necessity for the rich control are omitted. And the descriptions of the difference in the rich control contents at the step S12 based on the difference between the rich control for restoring the NOx occluding ability and that for purging sulfur are omitted. Moreover, the descriptions of the process for writing the quantity of NOx, the quantity of sulfur and the lean-driving duration at the ending of engine operation into the memory, is also omitted.

Next, the states of the exhaust gas during the first and second terms of the rich control and at the time of ending it in the exhaust gas purifying system 1 of the above-mentioned configuration will be explained below.

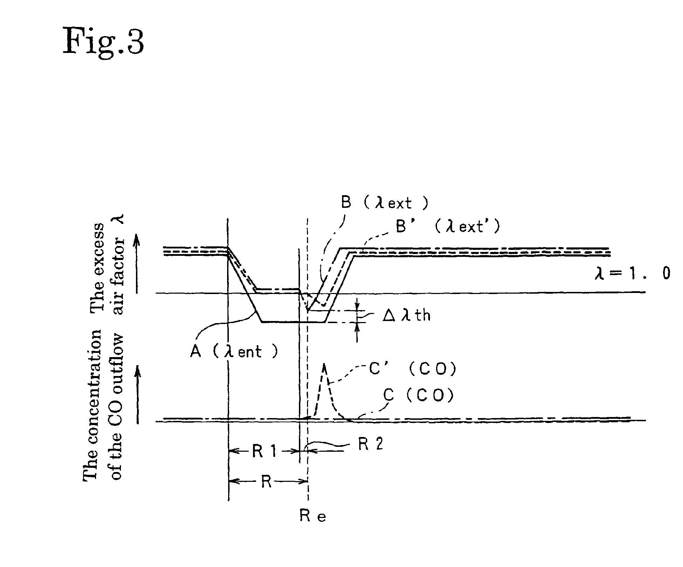

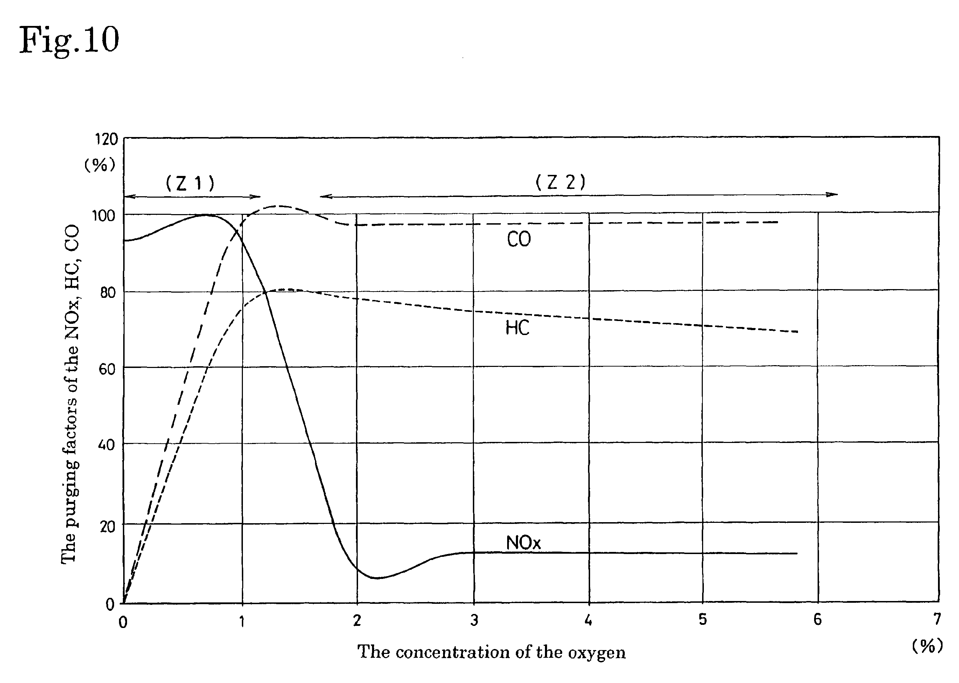

During the first term (initial stage) of the rich control, the discharge and reduction of NO₂ at the NOx occluding material 31Xc are not performed at the part Z1 in Fig. 10, unless the oxygen concentration in the atmosphere is at a certain level (about 1%) or lower. When the oxygen concentration is low, namely during Z1, NOx is reduced. Moreover, as shown in Fig.3, during the first term stage R1 of this rich control, the high oxygen concentration is measured at the catalyst exit, namely, the excess air factor λ ext is high. According to above-mentioned matter, it is presumed that the discharge and reduction of NO₂ are started in the front part of the catalyst since the oxygen concentration at the catalyst entrance falls, and that the oxygen concentration in the rear part of the catalyst is increased due to the discharge and reduction of NO₂ at the front part. And it is presumed that the oxidation-reduction function of CO and HC is stronger than the discharge function of NO₂ at the part Z2 in Fig. 10. Practically, the outflows (slips) of HC, CO, and NOx from the catalyst exit are not caused. When the oxygen concentration is high, namely during Z2, the HC and CO are oxidized.

Moreover, during the second term R2 of the rich control R, the discharge and reduction of NO₂ are performed in the whole area of the catalyst, and when the reaction starts to end, the oxygen concentration in the rear side of the catalyst starts to fall, and falls to the same level as that in the front side of the catalyst or lower. Namely, as shown in Fig.3, the excess air factor λ ext starts to fall and approaches to the excess air factor λ ent. Since the oxygen concentration in the rear part of the catalyst is also lowered in this state during the part Z1 in Fig. 10, CO and HC begin to flow out to the downstream side of the catalyst without being oxidized.

As described above, it is presumed that the discharge and reduction of NO₂, and the oxidation of HC and CO are time-sequentially progressing from the front part to the rear part of the catalyst according to the change of the oxygen concentration inside of the NOx occlusion reduction type catalyst in the first exhaust gas purifying device.

As the rich control progresses, the discharge and reduction of NO₂ proceed in the catalyst, and the rich control approaches to an end, the oxygen concentration at the catalyst exit falls to the same level as that at the catalyst entrance or lower. Namely, the difference between the outputs of the oxygen concentration sensors approaches to a predetermined judgment value and exceeds this predetermined judgment value. Namely, the difference Δ λ between the excess air factors exceeds the predetermined judgment value Δ λ ent. The rich control is ended at this point Re.

However, in the present invention, the second exhaust gas purifying device 32 is located at the downstream of the first exhaust gas purifying device 31. Therefore, at this ending stage of the rich control R, the reducers such as HC and CO flowing out of the first exhaust gas purifying device 31 can be purified by the second exhaust gas purifying device 32. Therefore, these reducers can be prevented from flowing out into the atmospheric air.

Namely, in the case that the second exhaust gas purifying device 32 is provided with the NOx occlusion reduction type catalyst or the DPF with the NOx occlusion reduction type catalyst, the discharge and reduction of NO₂ is in progress in this second exhaust gas purifying device 32 and the oxygen is high in the concentration. The reducers such as HC and CO flowing out of the first exhaust gas purifying device 31 at the upstream are consumed for reducing NO₂. Namely, since HC and CO are oxidized by this reduction, the reducers such as HC and CO can be prevented from flowing out into the atmospheric air.

Moreover, in the case that the second exhaust gas purifying device 32 is provided with the three-way catalyst or the oxidation catalyst having the oxygen occluding function, HC and CO are reduced by O₂ discharged from these catalysts, therefore, the reducers such as HC and CO can be prevented from flowing out into the atmospheric air in the similar way.

Therefore, the exhaust gas purifying system 1 of the configuration described above performs the rich control when it is required, and purifies HC and CO which are not oxidized through at the time of ending the rich control on the basis of the difference between the oxygen concentrations before and after the first exhaust gas purifying device 31, by the second exhaust gas purifying device 32 at the downstream side. Accordingly HC and CO can be prevented from being discharged into the atmospheric air.

An embodiment of cleaning the exhaust gas by this exhaust gas purifying system 1 is shown in Fig.3. In this embodiment, the second exhaust gas purifying device 32 is provided with the NOx occlusion reduction type catalyst. Fig.3 illustrates the relation ship between the excess air factor λ ent (full line A) at the entrance of the first exhaust gas purifying device 31 and the excess air factor λ ext (dot-dash line B) at the exit of the first exhaust gas purifying device 31. And Fig.3 illustrates the CO concentration (dot-dashed line C) at the downstream of the second exhaust gas purifying device 32 at that moment. Moreover, Fig.3 also illustrates the excess air factor λ ext (dashed line B') at the exit of the NOx occlusion reduction type catalyst 31 and the CO concentration (dashed line C') at the downstream of the NOx occlusion reduction type catalyst 31X, in the case that the second exhaust gas purifying device 32 is not arranged (the example for comparison).

Comparing the CO concentration (dot-dashed line C) of this embodiment with the CO concentration (dashed line C') of the example for comparison, the outflow of CO at the time of ending the rich control has disappeared in the embodiment. So, the effect of the present invention is apparent.

## Claims

1. An exhaust-gas purifying system (1) for an internal combustion engine (10), which is provided with a first exhaust-gas purifying device (31) comprising a NOx occlusion-reduction type catalyst arranged in an exhaust passage (30) of the internal combustion engine (10) and with oxygen concentration sensors (34, 35) arranged one at an upstream side and the other at a downstream side of the first exhaust-gas purifying device (31), whereas there is a control such that when a difference between oxygen-concentration values detected by the oxygen concentration sensors (34, 35) comes to be at or below the predetermined judgment value during a rich control done for restoring the catalytic activity of the first exhaust-gas purifying device (31), the system carries out a control to terminate the rich control, **characterized in that** a second exhaust-gas purifying device (32) for purifying HC and CO is arranged downstream of the first exhaust-gas purifying device (31) with no secondary-air supplying passage provided thereto, the second exhaust-gas purifying device (32) comprising another NOx occlusion-reduction type catalyst or a DPF carrying a NOx occlusion-reduction type catalyst thereon, either singly or in combination.

## Patentansprüche

1. Abgasreinigungssystem (1) für einen Verbrennungsmotor (10), welches eine erste Abgasreinigungsvorrichtung (31), die einen NOx-Einschluß-Reduktionstyp-Katalysator aufweist, der in einer Abgasleitung (30) des Verbrennungsmotors (10) angeordnet ist, und Sauerstoffkonzentrationssensoren (34, 35), von denen der eine auf der aufstromigen Seite und der andere auf der abstromigen Seite der ersten Abgasreinigungsvorrichtung (31) angeordnet ist, beinhaltet, wobei eine Steuerung derart vorgesehen ist, daß, wenn während einer Fettsteuerung, die durchgeführt wird, um die katalytische Aktivität der ersten Abgasreinigungsvorrichtung (31) wiederherzustellen, ein Unterschied zwischen Sauerstoffkonzentrationswerten, die durch die Sauerstoffkonzentrationssensoren (34, 35) erfaßt wurden, auf den vorbestimmten Beurteilungswert oder darunter fällt, das System einen Steuerungsvorgang durchführt, um die Fettsteuerung zu beenden, **dadurch gekennzeichnet, daß** eine zweite Abgasreinigungsvorrichtung (32) für das Reinigen von HC und CO abstromig zu der ersten Abgasreinigungsvorrichtung (31) angeordnet ist, ohne daß hierfür eine Zufuhrleitung für Sekundärluft vorgesehen ist, wobei die zweite Abgasreinigungsvorrichtung (32) einen weiteren NOx-Einschluß-Reduktionstyp-Katalysator oder einen DPF, der einen NOx-Einschluß-Reduktionstyp-Katalysator trägt, entweder einzeln oder in Kombination miteinander beinhaltet.

## Revendications

1. Un système de purification de gaz d'échappement (1) destiné à un moteur à combustion interne (10), lequel est muni d'un premier dispositif de purification de gaz d'échappement (31) comportant un catalyseur de type réducteur d'occlusion par les NOx arrangé dans un passage d'échappement (30) du moteur à combustion interne (10) et de capteurs de concentration en oxygène (34, 35) arrangés l'un au niveau d'un côté amont et l'autre au niveau d'un côté aval du premier dispositif de purification de gaz d'échappement (31), tandis qu'il s'exerce un contrôle tel que lorsqu'une différence entre des valeurs de concentration en oxygène détectées par les capteurs de concentration en oxygène (34, 35) vient à être au niveau de ou en dessous de la valeur d'évaluation prédéterminée au cours d'un contrôle riche fait pour rétablir l'activité catalytique du premier dispositif de purification de gaz d'échappement (31), le système effectue un contrôle pour mettre fin au contrôle riche, **caractérisé en ce qu'**un deuxième dispositif de purification de gaz d'échappement (32) destiné à purifier les HC et CO est arrangé en aval du premier dispositif de purification de gaz d'échappement (31) sans qu'un passage d'alimentation en air secondaire soit fourni sur celui-ci, le deuxième dispositif de purification de gaz d'échappement (32) comportant un autre catalyseur de type réducteur d'occlusion par les NOx ou un DPF sur lequel est porté un catalyseur de type réducteur d'occlusion par les NOx, soit seul, soit en combinaison.
